# EUROPÄISCHE PATENTSCHRIFT

(11) **EP 2 671 060 B1**
(45) Veröffentlichungstag und Bekanntmachung des Hinweises auf die Patenterteilung: **19.08.2015**
(21) Anmeldenummer: 12702818.1
(22) Anmeldetag: 02.02.2012
(51) Int. Cl.: G01M 3/20, F04D 19/04, F04D 25/16

(54) **LECKSUCHEINRICHTUNG**
LEAKAGE SEARCH DEVICE
INSTALLATION DE DÉTECTION DE FUITE

(30) Priorität: 03.02.2011 DE 102011010238
(43) Veröffentlichungstag der Anmeldung: 11.12.2013
(73) Patentinhaber: Oerlikon Leybold Vacuum GmbH, 50968 Köln (DE)
(72) Erfinder: BEYER, Christian, 50765 Köln (DE); SCHNEIDERS, Robert, 53797 Lohmar (DE); WERKER, Sascha, 53881 Euskirchen (DE)
(74) Vertreter: Von Kreisler Selting Werner - Partnerschaft von Patentanwälten und Rechtsanwälten mbB
(86) Internationale Anmeldenummer: PCT/EP2012/051795
(87) Internationale Veröffentlichungsnummer: WO 2012/104387

(56) Entgegenhaltungen:
- EP-B1- 1 585 951
- DE-A1- 19 735 250

## Beschreibung

Die Erfindung betrifft eine Lecksucheinrichtung.

Bekannte Gegenstrom-Lecksucheinrichtungen, wie sie beispielsweise aus EP 1 585 951 bekannt sind, verwenden zur Lecksuche eine Turbomolekularpumpe. Ein zu prüfender Gegenstand oder eine Prüfkammer, in der der zu prüfenden Gegenstand angeordnet ist, ist über eine Testgasleitung mit einer Vbrvakuumpumpe verbunden. Ferner ist die Testgasleitung mit zwei oder mehreren Zwischeneinlässen der Turbomolekularpumpe verbunden. Die Vorvakuumpumpe ist mit dem Auslass der Turbomolekularpumpe verbunden. Am Einlass der Turbomolekularpumpe ist der Testgasdetektor, insbesondere in einer durch die Turbomolekularpumpe evakuierten Kammer angeordnet. Hierdurch kann ein Testgasdetektor eingesetzt werden, der eine sehr hohe Empfindlichkeit aufweist. Das Detektieren des Testgases, bei dem es sich insbesondere um Helium handelt, erfolgt dadurch, dass das Testgas entgegen einer Hauptströmungsrichtung der Turbomolekularpumpe innerhalb der Turbomolekularpumpe zum Einlass strömt und durch den Testgasdetektor detektiert werden kann.

In der EP 1 585 951 ist die Testgasleitung zur Grobuntersuchung des Gegenstands mit dem Auslassbereich der Turbomolekularpumpe verbunden. Aufgrund der Verbindung der Testgasleitung mit dem Auslassbereich der Turbomolekularpumpe ist der Gegen- bzw. Rückströmungsweg des Testgases innerhalb der Turbomolekularpumpe relativ lang. Erst bei einem geringeren Druck in der Testgasleitung kann eine Verbindung der Testgasleitung mit einem Zwischenbereich der Turbomolekularpumpe erfolgen, so dass der Gegenströmungsweg verkürzt ist. Ein Einlassen des Testgases in diesen Zwischenbereich der Turbomolekularpumpe ist erst möglich, wenn der Druck in der Testgasleitung von geringen Abweichungen abgesehen, dem Druck im Zwischenbereich der Turbomolekularpumpe entspricht. Ein Verbinden der Testgasleitung mit einem weiteren Zwischeneinlass durch den ein weiteres Verkürzen des Gegenströmungsweges erfolgt, ist somit wiederum erst zu einem späteren Zeitpunkt, wenn eine weitere Verringerung des Prüfdrucks realisiert ist, möglich. Aufgrund des insbesondere zu Beginn einer Überprüfung eines Gegenstandes langen Gegen- bzw. Rückströmungswege sind die Prüfungszeiten und Ansprechzeiten, relativ lang.

Bei einer weiteren in Figur 3 der EP 1 585 951 dargestellten Ausführungsform kann anstatt des Verbindens der Auslassseite der Hochvakuumpumpe mit der Testgasleitung, die Testgasleitung mit einem Bereich innerhalb einer zweistufigen Holweckpumpe verbunden werden. Der mit der Vorvakuumpumpe verbundene Auslass der Hochvakuumpumpe ist sodann im selben Druckbereich der Holweckpumpe mit der Vorvakuumpumpe und nicht über den Auslass der Hochvakuumpumpe mit der Vorvakuumpumpe verbunden. Hierdurch erfolgt eine Verkürzung des Haupt- sowie des Gegenströmungsweges, wobei beide Wege gleich lang bleiben. Durch die unterschiedliche Verbindungsmöglichkeit der Hochvakuumpumpe mit der Testgasleitung beziehungsweise mit der Vorvakuumpumpe verbundenen Leitung kann auf einfache Weise unterschiedliche Anwendungsbereiche realisiert werden. Eine Verkürzung des Gegenströmungsweges gegenüber dem Hauptströmungsweg ist jedoch auch bei der Figur 3 der EP 1 585 951 beschriebenen Ausführungsform nicht möglich.

Aus DE 197 35 250 ist eine weitere Lecksucheinrichtung bekannt. Diese weist in Hauptströmungsrichtung hintereinander angeordnet eine Turbomolekularpumpe, eine Gasreibungspumpe und eine Vorvakuumpumpe auf. Zur Grobuntersuchung ist die Testgasleitung mit dem Auslass der Gasreibungspumpe verbunden. Zur Feinuntersuchung kann die Testgasleitung mit einem Bereich zwischen der Turbomolekularpumpe und der Gasreibungspumpe verbunden werden. Hierbei ist zur Feineinstellung ein dieser Testgasleitung ein Drosselventil angeordnet. Die Grobuntersuchung, das heißt der Untersuchungsbeginn erfolgt jedoch stets durch Zuleiten des Testgasmediums am Auslass der Gasreibungspumpe. Ein Zuführen des Testgasmediums bei einer Grobuntersuchung in dem Bereich zwischen der Gasreibungspumpe und der Turbomolekularpumpe ist nicht möglich, da ein direktes Zuführen des Testgases zu der Turbomolekularpumpe aufgrund des großen Druckunterschiedes zu Beschädigungen der Turbomolekularpumpe führen würde.

Aufgabe der Erfindung ist es, eine Lecksucheinrichtung beziehungsweise ein Verfahren zur Lecksuche zu schaffen, mit der beziehungswiese mit dem die Prüfzeiten verringert werden können.

Die Lösung der Aufgabe erfolgt erfindungsgemäß durch die Merkmale des Anspruchs 1 beziehungsweise 12.

Die erfindungsgemäße Lecksucheinrichtung weist eine Hochvakuumpumpe mit mehreren Stufen auf. An eine erste Stufe, die insbesondere als Turbomolekularpumpe ausgebildet sein kann, schließt sich eine zweite Stufe an, die vorzugsweise als Gasreibungspumpe insbesondere als Holweckstufe ausgebildet ist. Die Hochvakuumpumpe ist mit einem an deren Einlass angeordneten Testgasdetektor verbunden. Der Auslass der Hochvakuumpumpe ist ferner mit einer Vorvakuumpumpe verbunden, so dass mindestens ein Rotorelement der Hochvakuumpumpe einen Hauptströmungsweg vom Einlass entlang des mindestens einen Rotorelements zum Auslass definiert. Das mindestens eine Rotorelement umfasst vorzugsweise mehrere Rotorflügel der Turbomolekularpumpe, sowie beispielsweise ein im Wesentlichen zylindrisch ausgebildetes Rotorelement der als Holweckstufe ausgebildeten ersten Stufe. Erfindungsgemäß weist die Hochvakuumpumpe ferner mindestens eine weitere, das heißt zumindest eine dritte, sich in Hauptströmungsrichtung an die zweite Stufe anschließende Stufe auf. Auch bei dieser Stufe handelt es sich in bevorzugter Ausführungsform um eine Holweckstufe. Gegebenenfalls schließt sich hieran noch eine vierte oder gegebenenfalls noch weitere Stufe an, die in bevorzugter Ausführungsform jeweils als Holweckstufen ausgebildet sind. Hierbei sind die im Wesentlichen zylindrisch ausgebildeten Rotorelemente der Holweckstufe. vorzugsweise zueinander konzentrisch angeordnet. Um eine Verkürzung der Prüfzeit zu realisieren, ist die Testgasleitung zur Grobuntersuchung des Gegenstands über eine Verbindungsleitung mit einer der weiteren Stufen, das heißt mit der dritten oder einer weiteren Stufe, sofern diese vorgesehen sind, in einem Zwischenbereich dieser Stufe verbunden. Der Auslass der Hochvakuumpumpe bleibt hierbei mit der Vorvakuumpumpe verbunden um einen Weglängenunterschied zwischen Hauptströmungsweg und Gegenströmungsweg zu realisieren. Der Gegenströmungsweg ist der Weg, den das Testgas vom Zwischenbereich zum Testgasdetektor beziehungsweise zum Einlass der Hochvakuumpumpe zurücklegt. Um dieses erfindungsgemäße Einlassen von Testgas in einem Zwischenbereich zu ermöglichen, ist ferner in der Verbindungsleitung eine Gas-Entspannungseinrichtung, wie eine Blende oder eine Drossel vorgesehen. Durch das Vorsehen einer Gas-Entspannungseinrichtung in der Verbindungsleitung, ist es möglich, das Testgas auf einen Druck zu entspannen, der an das interne Saugvermögen der Hochvakuumpumpe und das bis zum Auslass vorgesehene Kompressionsverhältnis im Zwischenbereich angepasst ist. Hierdurch ist es möglich, auch zu Beginn der Überprüfung, bei dem zunächst eine grobe Überprüfung der Dichtigkeit des zu prüfenden Gegenstandes erfolgt, das Testgas über einen verkürzten Gegenströmungsweg zum Gasdetektor zu leiten. Aufgrund der Verkürzung des Gegenströmungsweges ist die Ansprechzeit des Testgasdetektors schneller. Die Prüfzeit kann somit deutlich verkürzt werden. Insbesondere wenn relativ starke Undichtigkeiten des zu prüfenden Gegenstandes detektiert werden, können diese erheblich schneller festgestellt werden. Die Lecksuche beginnt hierbei vorzugsweise bei maximaler Vorvakuumbeständigkeit der Hochvakuumpumpe, das heißt bei dem maximal zulässigen Druck auf der Austrittsseite der Hochvakuumpumpe, der die Hochvakuumpumpendrücke unbeeinflusst lässt.

Durch das erfindungsgemäße Vorsehen der Gas-Entspannungseinrichtung in der Verbindungsleitung kann ein Anpassen an das interne Saugvermögen und das bis zum Auslass vorgesehene Kompressionsverhältnis der Hochvakuumpumpe im Zwischenbereich erfolgen. Bevorzugt ist es hierbei, dass die Gas-Entspannungseinrichtung variable bzw. einstellbar ist. Insbesondere zu Beginn der Überprüfung des zu prüfenden Gegenstandes erfolgt durch die Gas-Entspannungseinrichtung eine Reduzierung des Testgasdrucks um mindestens 30%, vorzugsweise um mindestens 40%.

Die erfindungsgemäße Anordnung weist vorzugsweise eine Verkürzung des Gegenströmungsweges bereits zu Beginn der Lecksuche um mindestens 1/5 gegenüber dem Haupströmungsweg insbesondere um mindestens 1/4 auf.

In besonders bevorzugter Ausführungsform ist der Zwischenbereich über den die Prüferkammer oder ein zu prüfender Gegenstand zu Prüfbeginn mit der Hochvakuumpumpe verbunden ist in einem Bereich der in Hauptströmungsrichtung letzten Molekular- bzw. Gasreibungspumpe angeordnet. Bezogen auf die Länge des Strömungsweges in dieser Molekular- bzw. Gasreibungsstufe ist der Zwischenbereich vorzugsweise näher am Auslass als am Einlass dieser Molekular- bzw. Gasreibungsstufe angeordnet. Der Zwischenbereich ist somit in Strömungsrichtung bezogen auf die Weglänge der Strömung in der letzten Molekular- bzw. Gasreibungsstufe in bevorzugter Ausführungsform in der zweiten Hälfte des Hauptströmungsweges, angeordnet. In bevorzugter Ausführungsform ist das Verhältnis des gesamten Gasströmungsweges in dieser Molekular- bzw. Gasreibungspumpe zu dem Verhältnis des Weges zwischen den Zwischenbereich und dem Auslass kleiner als 1/2, insbesondere kleiner als 1/3 und besonders bevorzugt kleiner als 1/4. Der Gegenströmungsweg innerhalb der letzten Stufe in der der Zwischenbereich angeordnet ist, beträgt vorzugsweise weniger als 80 % und besonders bevorzugt weniger als 60 % des Hauptströmungsweges innerhalb dieser Stufe. Insbesondere beträgt der Gegenströmungsweg 50%, bezogen auf diese Stufe, in welchem der Zwischenbereich etwa in der Mitte dieser Stufe angeordnet ist. Der Abstand zwischen den Zwischenbereich und dem Auslass ist erfindungsgemäß größer als 0 und vorzugsweise größer als 1/6, insbesondere größer als 1/5 bezogen auf den gesamten Strömungsweg innerhalb der Molekular- bzw. Gasreibungspumpe.

Bei einer weiteren bevorzugten Ausführungsform der Erfindung ist eine gasselektive Gas-Entspannungseinrichtung, das heißt insbesondere eine gasselektive Drossel oder Blende vorgesehen. Hierdurch strömt das Testgas Wie Helium oder Wasserstoff oder entsprechende Testgas-Bestandtelle schneller als andere Gase durch die Gas-Entspannungseinrichtung, so dass diese in kürzerer Prüfzeit vom Testgasdetektor erfasst werden können. Durch das Vorsehen einer gasselektiven Gas-Entspannungseinrichtung kann somit die Prüfzeit insbesondere zu Beginn der Lecksuche weiter verringert werden.

Bei einer bevorzugten Weiterbildung der Erfindung ist eine die Gas-Entspannungseinrichtung überbrückende Bypassleitung vorgesehen. Die ein Ventil aufweisende Bypassleitung dient zur Testgaszufuhr zum Zwischenbereich bei gegenüber der Grobuntersuchung verringertem Testgasdruck. Sobald der in der Testgasleitung herrschende Testgasdruck nicht mehr entspannt werden muss, um dem Zwischenbereich der Hochvakuumpumpe zugeführt werden zu können, erfolgt somit ein Überbrücken der Gas-Entspannungseinrichtung. Ebenso ist es möglich die Gas-Entspannungseinrichtung derart auszugestalten, dass diese vollständig geöffnet werden kann und somit nicht mehr als Drossel wirkt.

Vorzugsweise ist die Gas-Entspannungseinrichtung Bestandteil der Hochvakuumpumpe. Die Gas-Entspannungseinrichtung ist somit insbesondere im Pumpengehäuse angeordnet oder zumindest unmittelbar mit diesem verbunden. Dies hat den Vorteil, dass das Anschließen der Hochvakuumpumpe an die Testgasleitung vereinfacht ist, weil keine Gas-Entspannungseinrichtung zwischengeschaltet werden muss.

Ferner ist es möglich zusätzlich zu der Verbindungsleitung, durch die die Testgasleitung mit dem Zwischenbereich verbunden ist, mindestens eine weitere Verbindungsleitung vorzusehen. Über die mindestens eine weitere Verbindungsleitung kann ein Verbinden der Testgasleitung mit einem weiteren Zwischenbereich der Hochvakuumpumpe erfolgen. Dieser Zwischenbereich ist hierbei näher am Einlass der Hochvakuumpumpe angeordnet, so dass ein weiteres Verkürzen des Gegenströmungsweges gegenüber dem Hauptströmungsweg erfolgt. Eine weitere Verbindungsleitung ist hierbei vorzugsweise mit einem Ventil versehen, da ein Öffnen dieser Verbindungsleitung und somit ein Zuführen von Testgas durch einen entsprechenden Bereich der Hochvakuumpumpe erst erfolgen kann, wenn der Druck in der Testgasleitung entsprechend gering ist.

Ferner betrifft die Erfindung ein Verfahren zur Lecksuche. Hierbei werden eine Prüfkammer und/oder ein zu prüfender Gegenstand über der Testgasleitung einer Vorvakuumpumpe verbunden. Ferner ist eine Hochvakuumpumpe vorgesehen, an deren Einlass ein Testgasdetektor angeordnet wird und deren Auslass mit der Vorvakuumpumpe verbunden ist. Die Hochvakuumpumpe weist mindestens ein Rotorelement auf, sodass ein Hauptströmungsweg vom Auslass entlang des mindestens einen Rotorelements zum Auslassen definiert ist. Ferner weist die Hochvakuumpumpe eine erste, insbesondere als Turbomolekularpumpe, ausgebildete Stufe, sowie eine sich in Hauptströmungsrichtung hieran anschließende zweite insbesondere als Gasreibungsstufe ausgebildete Stufe auf. Desweiteren ist erfindungsgemäß eine sich an die zweite Stufe in Hauptströmungsrichtung anschließende dritte, wiederum vorzugsweise als Gasreibungspumpe ausgebildete Stufe vorgesehen.

Erfindungsgemäß wird die Testgasleitung zur Grobuntersuchung des Gegenstands über eine Verbindungsleitung mit einem in der dritten oder einer weiteren Stufe vorgesehenen Zwischenbereich verbunden. Da der Auslass der Hochvakuumpumpe weiterhin mit der Vorvakuumpumpe verbunden bleibt, erfolgt somit eine Verkürzung des Gegenströmungsweges gegenüber dem Hauptströmungsweg. Die Grobuntersuchung erfolgt vorzugsweise unmittelbar zu Beginn der Lecksuche. Bei erfolgreicher Grobuntersuchung wird die Prüfkammer und/oder der zu prüfende Gegenstand sodann in bevorzugter Ausführungsform über eine mit der Testgasleitung verbundene weitere Verbindungsleitung mit einem weiteren Zwischenbereich der Hochvakuumpumpe verbunden, sodass eine weitere Verkürzung des Gegenströmungsweges erfolgt. Desweiteren ist bevorzugt, dass insbesondere bei der Grobuntersuchung ein insbesondere gasselektives Drosseln beziehungsweise Entspannen der Hochvakuumpumpe zugeführten Testgases erfolgt.

In besonders bevorzugter Ausführungsform erfolgt ein Durchführen des erfindungsgemäßen Verfahrens mittels der vorstehenden beschriebenen erfindungsgemäßen Lecksucheinrichtung.

Nachfolgend wird die Erfindung anhand einer bevorzugten Ausführungsform unter Bezugnahme auf die anliegende Zeichnung näher erläutert.

Es zeigen:
- Figur 1:: eine schematische Schnittansicht einer bevorzugten Ausführungsform der erfindungsgemäßen Lecksucheinrichtung und
- Figur 2:: eine schematische Schnittansicht einer weiteren bevorzugten Ausführungsform einer zweiten bis fünften Stufe der Hochvakuumpumpe

Im dargestellten Ausführungsbeispiel handelt es sich bei der Hochvakuumpumpe um eine Turbomolekularpumpe 10, der in Förderrichtung zwei Hohlweckstufen 11 (zweite und dritte Stufe) nachgeordnet sind. Ein Rotor 12 der Turbomolekularpumpe 10 ist mit mehreren Rotorelementen 14 verbunden. Die flügelförmigen Rotorelementen 14 wirken mit zwischen den Rotorelementen 14 angeordneten Statorelementen 16 zusammen. Die Statorlemente 16 sind über Statorringe 18 in einem Pumpengehäuse 20 fixiert. Durch die Rotorflügel 14 sowie die Statorflügel 16 erfolgt ein Fördern von Gas in Richtung eines Pfeils 22. Die sich an die Turbomolekularpumpe 10 anschließenden Hohlweckstufen 11 weisen ein mit dem Rotorelement 12 verbundenes zylindrisches Rotorelement 13 auf, das zwischen Gewindebahnen angeordnet ist. Das zylindrische Rotorelement in Verbindung mit jeweils einer Gewindebahn bildet somit eine zweite und dritte Pumpstufe 15, 17 aus. Hierdurch erfolgt zunächst ein Fördern des Gases zur Vakuumerzeugung im Bereich eines Testgasdetektors 38 in Richtung eines Pfeils 26 innerhalb der zweiten Stufe 15 und sodann in Richtung eines Pfeils 28 innerhalb der dritten Stufe 17 zu einem Auslassbereich 30. Die erste Stufe ist durch die Turbomolekularpumpe 10 ausgebildet.

Der Auslassbereich 30 ist im dargestellten Ausführungsbeispiel über einen Auslasskanal 32 mit dem Pumpenauslass 34 der Hochvakuumpumpe 10 verbunden.

Mit einem Einlass 36 der Hochvakuumpumpe 10 ist der Testgasdetektor 38 verbunden. Mit dem Auslass 34 der Hochvakuumpumpe ist über eine Leitung 37, in der ein Ventil 39 angeordnet ist, eine Vorvakuumpumpe 40 verbunden. Eine Prüfkammer 42, in der der zu prüfende Gegenstand angeordnet ist, ist über eine Testgasleitung 44 ebenfalls mit der Vorvakuumpumpe 40 verbunden. Anstelle des Vorsehens einer Prüfkammer 42 kann die Testgasleitung 44 auch unmittelbar mit dem zu prüfenden Gegenstand verbunden sein. In der Testgasleitung 44 ist ein weiteres Ventil 46 angeordnet.

Die Testgasleitung 44 ist über eine Verbindungsleitung 48 mit einem Zwischenbereich 50 der Hohlweckstufe 11 verbunden. Bei dem Zwischenbereich 50 handelt es sich um einen Bereich, der in Hauptströmungsrichtung 22, 26, 28 vor dem Auslassbereich 30 angeordnet ist. Ein Gegenströmungsweg des Testgases ist somit kürzer als der Hauptströmungsweg, da das Testgas nur von dem Zwischenbereich 50 in der dritten Stufe 17 zum Einlass 36 der Hochvakuumpumpe strömen muss. Die Strecke zwischen dem Auslassbereich 30 und dem Zwischenbereich 50 muss von dem Testgas nicht durchströmt werden.

In der Verbindungsleitung 48 ist neben einem Ventil 52 eine Gas-Entspannungseinrichtung 54, bei der es sich insbesondere um eine Drossel handelt, angeordnet. Die Drossel 54 kann über eine Bypassleitung 56, in der ein Ventil 58 angeordnet ist, überbrückt werden. Ein weiterer Zwischenbereich 60 der Hochvakuumpumpe 10 ist über eine weitere Verbindungsleitung 62, in der ein Ventil 64 vorgesehen ist, mit der Testgasleitung 44 verbunden. Der Zwischenbereich 60 befindet sich hierbei näher am Einlass 36 der Hochvakuumpumpe, so dass der Gegenströmungsweg weiter verringert ist.

Gegebenenfalls kann, wie im dargestellten Ausführungsbeispiel dargestellt, ein weiterer Zwischenbereich 66 der Hochvakuumpumpe 10 über eine weitere Verbindungsleitung 68 mit Ventil 70 mit der Testgasleitung 44 verbunden sein. Der weitere Zwischenbereich 66 befindet sich näher am Einlass 36 als der Zwischeneinlass 60, so dass wiederum eine weitere Verkürzung des Gegenströmungswegs erfolgt.

Zu Beginn der Überprüfung eines zu prüfenden Gegenstands wird zunächst das Ventil 46 geöffnet, um in der Prüfkammer 42 oder unmittelbar in dem zu prüfenden Gegenstand mit der Hilfe der Vorvakuumpumpe 40 den Druck zu verringern. Gleichzeitig wird mit Hilfe der Hochvakuumpumpe der Druck im Bereich des Testgasdetektors 38 auf dem erforderlichen geringen Druck gehalten.

Sobald der Druck auf das Niveau der Vorvakuumbeständigkeit der Hochvakuumpumpe abgesenkt wurde, kann die Grobüberprüfung beginnen.

Dazu bleibt das Ventil 46 offen, zusätzlich wird aber Ventil 39 und Ventil 52 geöffnet. Somit wird ein Bypassgasstrom durch den Bereich der Gasreibungspumpe geführt und vorhandenes Testgas kann zum Detektor gelangen. Bei weiterem Absinken des Druckniveaus wird dann das Ventil 46 geschlossen und der gesamte abzupumpende Gasstrom wird durch den austrittseitigen Bereich der Gasreibungspumpe geführt.

Beispielsweise beträgt das interne Saugvermögen der Turbomolekularpumpe im Bereich des Zwischenbereichs 50 5 I/s. Mit einem Querschnitt der Drossel 54 von beispielsweise 2 mm kann bei relativ hohem Druck von beispielsweise 15 mbar das Gas auf einen zulässigen Druck in dem Zwischenbereich 50 auf beispielsweise 7 mbar entspannt werden.

Sofern bei der ersten Grobprüfung keine Undichtigkeiten des zu prüfenden Gegenstandes detektiert werden, erfolgt ein weiteres Reduzieren des Drucks. Hierbei wird sodann das Ventil 52 geschlossen und das Ventil 58 geöffnet, so dass das Testgas über die Bypassleitung 56 zu dem Zwischenbereich 50 strömen kann. Bei diesem Druckbereich ist eine Entspannung des Testgasdruckes durch die Gas-Entspannungseinrichtung 54 nicht mehr erforderlich.

Sofern auch hierbei kein Testgas von dem Testgasdetektor 38 detektiert werden konnte, erfolgt ein weiteres Reduzieren des Drucks, wobei das Ventil 52 geschlossen bleibt, das Ventil 58 geschlossen wird und das Ventil 64 der weiteren Verbindungsleitung 62 geöffnet wird. Bei diesem weiter reduzierten Druck kann ein Zuführen des Testgases in den Zwischenbereich 60 erfolgen, der einen weiter verkürzten Gegenströmungsweg und somit einen verkürzten Weg des Testgases zu dem Testgasdetektor 38 aufweist.

Gegebenenfalls kann eine weitere Reduzierung des Drucks erfolgen, wobei das Ventil 64 geschlossen und das Ventil 70 geöffnet werden kann, um eine Zufuhr des Testgases über die weitere Verbindungsleitung 68 zu dem Bereich 66 zu ermöglichen.

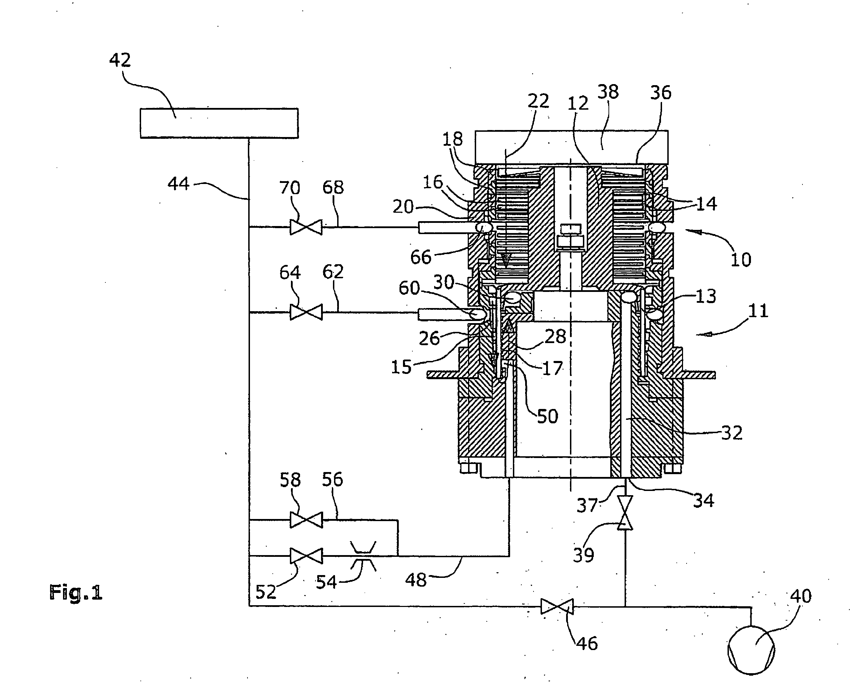

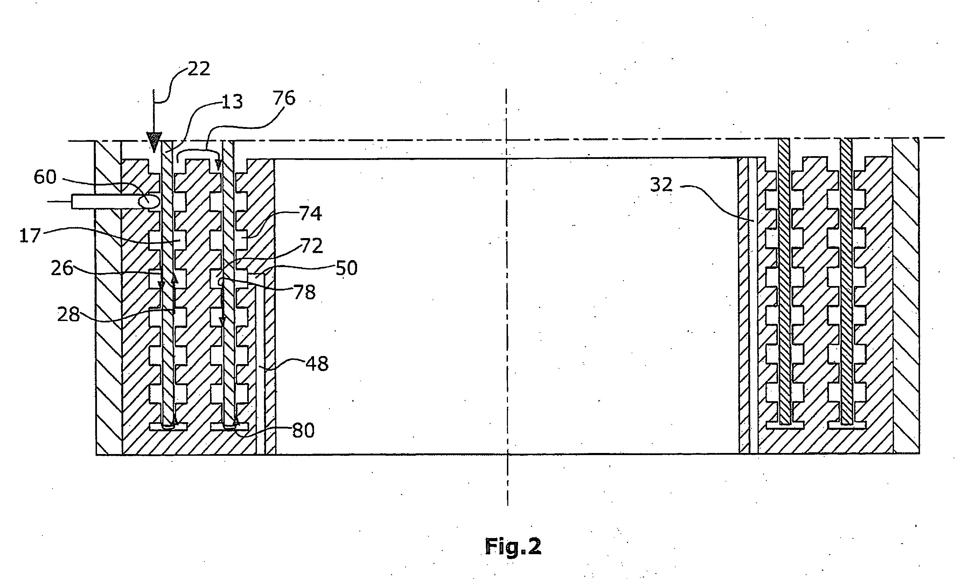

Figur 2 zeigt eine Detaildarstellung einer weiteren Ausführungsform einer erfindungsgemäßen Lecksucheinrichtung. Hierbei ist nur der sich an die erste, insbesondere als Turbomolekularpumpe ausgebildete Stufe 10 anschließende Bereich dargestellt. In diesem sind ähnliche und identische Bauteile mit denselben Bezugszeichen wie bei der in Figur 1 dargestellten Ausführungsform bezeichnet.

Anstelle zweier Holweckpumpen, den Stufen zwei und drei, gemäß der in Figur 1 dargestellten Ausführungsform weist die in Figur 2 dargestellte Ausführungsform vier Holweckpumpen auf. Diese bilden die zweite Stufe 15, die dritte Stufe 17, eine vierte Stufe 72 sowie eine fünfte Stufe 74.

Das von dem Testgasdetektor 38 abgesaugte Medium strömt entlang des Hauptströmungsweges zunächst wie durch den Pfeil 22, dargestellt durch die Turbomolekularstufe 10. Sodann gelangt das Gas durch die als Holweckstufe ausgebildete zweite Stufe 15 (Pfeil 26) und sodann in die dritte Stufe 17 (Pfeil 28). Am Hauptströmungsrichtungsende dieser Holweckstufe 17 wird das Gas wie durch den Pfeil 76 dargestellt erneut umgelenkt und gelangt in die vierte Stufe 72 in der es in Richtung des Pfeils 78 strömt. Aus der vierten Stufe gelangt es durch Umlenkung (Pfeil 80) in die letzte, beziehungsweise in dem dargestellten Ausführungsbeispiel, fünfte Stufe 74. Aus dieser gelangt das Gas in den Auslasskanal 32, der zum Auslass 34 der Hochvakuumpumpe führt.

In diesem Ausführungsbeispiel ist, der Zwischenbereich 50, der mit der Verbindungsleitung 48 verbunden ist, in einem mittleren Bereich der letzten beziehungsweise fünften Stufe 74 mit dieser verbunden.

## Patentansprüche

1. Lecksucheinrichtung, mit
einer mit einer Prüfkammer (42) und/oder einem zu prüfenden Gegenstand und einer Vorvakuumpumpe (40) verbundenen Testgasleitung (44) und
einer Hochvakuumpumpe (10, 11), an deren Einlass ein Testgasdetektor (38) angeordnet und deren Auslass (34) mit der Vorvakuumpumpe (40) verbunden ist, wobei die Hochvakuumpumpe (10, 11) mindestens ein Rotorelement (12, 13) aufweist, so dass ein Hauptströmungsweg vom Einlass (36) entlang des mindestens einen Rotorelements (12, 13) zum Auslass (34) definiert ist, und wobei die Hochvakuumpumpe (10, 11) eine erste Stufe (10), eine sich in Hauptströmungsrichtung hieran anschließende zweite Stufe(15) und mindestens eine sich in Hauptströmungsrichtung hieran anschließende weitere Stufe (17, 72,74) aufweist,
**dadurch gekennzeichnet, dass**
die Testgasleitung (44) zur Grobuntersuchung des Gegenstandes über eine Verbindungsleitung (48) mit einer der weitere Stufen (17, 72, 74) in einen Zwischenbereich (50) der weiteren Stufe (17, 72, 74) verbunden ist und der Auslass (34) der Hochvakuumpumpe (10, 11) mit der Vorvakuumpumpe (40) verbunden bleibt, so dass der sich vom Zwischenbereich (50) zum Einlass (36) erstreckende Gegenströmungsweg des Testgases kürzer als der Hauptströmungsweg ist, und
dass in der Verbindungsleitung (48) eine Gas-Entspannungseinrichtung (54) zur Entspannung des Testgases auf einen Druck angeordnet ist, der an das interne Saugvermögen der Hochvakuumpumpe (10, 11) im Zwischenbereich (50) angepasst ist und die Lecksuche bei maximaler Vorvakuumbeständigkeit der Hochvakuumpumpe (10, 11) beginnen kann.

2. Lecksucheinrichtung nach Anspruch 1, **dadurch gekennzeichnet, dass** die Hochvakuumpumpe (10, 11) als zweite und/oder weitere Stufe eine Gasreibungsstufe, insbesondere eine Holweckstufe aufweist, wobei vorzugsweise der Gasreibungsstufe eine Turbomolekularpumpe vorgeschaltet ist.

3. Lecksucheinrichtung nach Anspruch 2, **dadurch gekennzeichnet, dass** der Zwischenbereich (50) in der in Hauptströmungsrichtung letzten Stufe (17, 72, 74) der Hochvakuumpumpe angeordnet ist.

4. Lecksucheinrichtung nach einem der Ansprüche 1 oder 2, **dadurch gekennzeichnet, dass** der Gegenströmungsweg innerhalb der Stufe, in der der Zwischenbereich (50) angeordnet ist, kleiner als 80%, insbesondere kleiner als 60% des Hauptströmungsweges innerhalb dieser Stufe ist, mindestens um ein Fünftel kürzer, insbesondere mindestens um ein Viertel kürzer als der Hauptströmungsweg ist.

5. Lecksucheinrichtung nach einem der Ansprüche 1 bis 4, **dadurch gekennzeichnet, dass** der Gegenströmungsweg mindestens um ein Fünftel kürzer, insbesondere mindestens um ein Viertel kürzer als der Hauptströmungsweg ist.

6. Lecksucheinrichtung nach einem der Ansprüche 1 bis 5, **dadurch gekennzeichnet, dass** die Gas-Entspannungseinrichtung (54) eine Reduzierung des Testgasdrucks um mindestens 30%, insbesondere mindestens 40% bewirkt.

7. Lecksucheinrichtung nach einem der Ansprüche 1 bis 6, **dadurch gekennzeichnet, dass** die Gas-Entspannungseinrichtung (54) eine gasselektive Drossel aufweist.

8. Lecksucheinrichtung nach einem der Ansprüche 1 bis 7, **gekennzeichnet durch** eine ein Ventil (58) aufweisende, die Gas-Entspannungseinrichtung (54) überbrückende Bypassleitung (56) zur Testgaszufuhr zum Zwischenbereich (50) bei gegenüber der Grobuntersuchung verringertem Testgasdruck.

9. Lecksucheinrichtung nach einem der Ansprüche 1 bis 8, **dadurch gekennzeichnet, dass** die Gas-Entspannungseinrichtung (54) Bestandteil der Hochvakuumpumpe (10, 11) ist.

10. Lecksucheinrichtung nach einem der Ansprüche 1 bis 9, **dadurch gekennzeichnet, dass** die Testgasleitung (44) über mindestens eine weitere Verbindungsleitung (62, 68) mit einem den Gegenströmungsweg verkürzenden weiteren Zwischenbereich (60, 66) des Hauptströmungswegs verbunden ist.

11. Lecksucheinrichtung nach Anspruch 10, **dadurch gekennzeichnet, dass** in der mindestens einen weiteren Verbindungsleitung (62, 68) ein Ventil (64, 70) angeordnet ist.

12. Verfahren zur Lecksuche mit einer Lecksucheinrichtung, mit
einer mit einer Prüfkammer (42) und/oder einem zu prüfenden Gegenstand und einer Vorvakuumpumpe (40) verbundenen Testgasleitung (44) und
einer Hochvakuumpumpe (10, 11), an deren Einlass ein Testgasdetektor (38) angeordnet und deren Auslass (34) mit der Vorvakuumpumpe (40) verbunden ist, wobei die Hochvakuumpumpe (10, 11) mindestens ein Rotorelement (12, 13) aufweist, so dass ein Hauptströmungsweg vom Einlass (36) entlang des mindestens einen Rotorelements (12, 13) zum Auslass (34) definiert ist, und wobei die Hochvakuumpumpe (10, 11) eine erste Stufe (10), eine sich in Hauptströmungsrichtung hieran anschließende zweite Stufe(15) und mindestens eine sich in Hauptströmungsrichtung hieran anschließende weitere Stufe (17, 72,74) aufweist, insbesondere einer Lecksucheinrichtung nach einem der Ansprüche 1 bis 11,
bei welchem die Testgasleitung (44) zur Grobuntersuchung des Gegenstands über eine Verbindungsleitung (48) mit einer der weiteren Stufen (17, 72 ,74) in einen Zwischenbereich (50) der Stufen (17, 72, 74) verbunden wird und der Auslass (34) der Hochvakuumpumpe (10, 11) mit der Vörvakuumpumpe (40) verbunden bleibt, sodass der sich vom Zwischenbereich (50) zum Einlass (36) erstreckende Gegenströmungsweg des Testgases kürzer als der Hauptströmungsweg ist.

13. Verfahren nach Anspruch 12, bei welchem die Grobuntersuchung unmittelbar zu Beginn der Leckuntersuchung erfolgt.

14. Verfahren nach einem der Ansprüche 12 oder 13, bei welchem die Prüfkammer (42) und/oder der zu prüfende Gegenstand nach erfolgter Grobuntersuchung über eine weitere mit der Testgasleitung (44) verbundene Verbindungsleitung (62, 68) mit
einem den Gegenströmungsweg verkürzenden weiteren Zwischenbereich (60,66) verbunden wird.

## Claims

1. A leakage search device comprising
a test gas line (44) connected with a test chamber (42) and/or an object under test and a backup vacuum pump (40), and
a high-vacuum pump (10, 11), at whose inlet a test gas detector (38) is arranged and whose outlet (34) is connected with the backup pump (40), the high-vacuum pump (10, 11) comprising at least one rotor element (12, 13) so that a main flow path is defined from the inlet (36) along the at least one rotor element (12, 13) to the outlet (34), and wherein the high-vacuum pump (10, 11) comprises a first stage (10), a second stage (15) joining the same in the main flow direction, and at least one further stage (17, 72, 74) joining the latter in the main flow direction,
**characterized in that**
for a rough examination of the object under test, the test gas line (44) is connected, via a connection line (48), with one of the further stages (17, 72, 74) in an intermediate region (50) of that further stage (17, 72, 74) and the outlet (34) of the high-vacuum pump (10, 11) remains connected with the backup pump (40) so that the counter-flow path of the test gas extending from the intermediate region (50) to the inlet (36) is shorter than the main flow path, and
a gas expansion device (54) is arranged in the connection line (48) to expand the test gas to a pressure matched to the internal suction capacity of the high-vacuum pump (10, 11) in the intermediate region (50), and the leakage search can be started at maximum pre-vacuum stability of the high-vacuum pump (10, 11).

2. The leakage search device of claim 1, **characterized in that** the high-vacuum pump (10, 11) has a gas friction stage, in particular a Holweck stage, as the second and/or third stage, with a turbomolecular pump preferably being arranged upstream of the gas friction stage.

3. The leakage search device of claim 2, **characterized in that** the intermediate region (50) is arranged in the last stage (17, 72, 74) of the high-vacuum pump, seen in the main flow direction.

4. The leakage search device of one of claims 1 or 2, **characterized in that** the counter-flow path in the stage, in which the intermediate region (50) is situated, is shorter than 80%, in particular shorter than 60% of the main flow path in this stage, and is shorter by at least one fifth, in particular by at least one fourth of the main flow path.

5. The leakage search device of one of claims 1 to 4, **characterized in that** the counter-flow path is shorter by at least one fifth, in particular by at least one fourth of the main flow path.

6. The leakage search device of one of claims 1 to 5, **characterized in that** the gas expansion device (54) causes a reduction in the test gas pressure by at least 30%, in particular by at least 40%.

7. The leakage search device of one of claims 1 to 6, **characterized in that** the gas expansion device (54) comprises a gas-selective throttle.

8. The leakage search device of one of claims 1 to 7, **characterized by** a bypass line (56) for test gas supply to the intermediate region (50) at a test gas pressure reduced with respect to the rough examination, the bypass line including a valve (58) and bypassing the gas expansion device (54).

9. The leakage search device of one of claims 1 to 8, **characterized in that** the gas expansion device (54) is part of the high-vacuum pump (10, 11).

10. The leakage search device of one of claims 1 to 9, **characterized in that** the test gas line (44) is connected, via at least one further connection line (62, 68), with a further intermediate region (60, 66) of the main flow path that shortens the counter-flow path.

11. The leakage search device of claim 10, **characterized in that** a valve (64, 70) is arranged in the at least one further connection line (62, 68).

12. A method for searching for leakages with a leakage search device, comprising
a test gas line (44) connected with a test chamber (42) and/or an object under test and a backup vacuum pump (40), and
a high-vacuum pump (10, 11), at whose inlet a test gas detector (38) is arranged and whose outlet (34) is connected with the backup pump (40), the high-vacuum pump (10, 11) comprising at least one rotor element (12, 13) so that a main flow path is defined from the inlet (36) along the at least one rotor element (12, 13) to the outlet (34), and wherein the high-vacuum pump (10, 11) comprises a first stage (10), a second stage (15) joining the same in the main flow direction, and at least one further stage (17, 72, 74) joining the latter in the main flow direction, in particular a leakage search device of one of claims 1 to 11,
wherein, for a rough examination of the object under test, the test gas line (44) is connected, via a connection line (48), with one of the further stages (17, 72, 74) in an intermediate region (50) of that further stage (17, 72, 74) and the outlet (34) of the high-vacuum pump (10, 11) remains connected with the backup pump (40) so that the counter-flow path of the test gas extending from the intermediate region (50) to the inlet (36) is shorter than the main flow path.

13. The method of claim 12, wherein the rough examination is performed immediately at the beginning of the leakage search.

14. The method of one of claims 12 or 13, wherein, after the rough examination, the test chamber (42) and/or the object under test is connected, via a further connection line (62, 68) connected with the test gas line (44), with a further intermediate region (60, 66) shortening the counter-flow path.

## Revendications

1. Installation de détection de fuite, avec
une canalisation pour gaz traceur (44) reliée à une chambre de test (42) et/ou à un objet à tester et à une pompe à vide préliminaire (40) et
une pompe à vide poussé (10, 11) à l'entrée de laquelle est disposé un détecteur (38) de gaz traceur et dont la sortie (34) est reliée à la pompe à vide préliminaire (40), la pompe à vide poussé (10, 11) comprenant au moins un élément rotor (12, 13) de façon qu'un chemin de flux principal allant de l'entrée (36) le long le ou les éléments rotor (12, 13) jusqu'à la sortie (34) soit défini, et la pompe à vide poussé (10, 11) comprenant un premier étage (10), un deuxième étage (15) suivant le premier dans la direction du flux principal et au moins un autre étage (17, 72, 74) suivant le deuxième dans la direction du flux principal,
**caractérisée en ce que**
la canalisation pour gaz traceur (44) est reliée, pour un test rapide de l'objet, à l'aide d'une canalisation de raccordement (48), à un des autres étages (17, 72, 74) dans une zone intermédiaire (50) de cet autre étage (17, 72, 74) et la sortie (34) de la pompe à vide poussé (10, 11) reste reliée à la pompe à vide préliminaire (40), de façon que le chemin de contre-courant du gaz traceur s'étendant de la zone intermédiaire (50) à l'entrée (36) soit plus court que le chemin de flux principal, et
qu'un dispositif détendeur de gaz (54) est disposé dans la canalisation de raccordement (48) pour détendre le gaz traceur à une pression qui est adaptée à la capacité interne d'aspiration de la pompe à vide poussée (10, 11) dans la zone intermédiaire (50) et que la détection de fuite peut commencer à une stabilité maximale de vide préliminaire de la pompe à vide poussé (10, 11).

2. Installation de détection de fuite selon la revendication 1, **caractérisée en ce que** la pompe à vide poussé (10, 11) comprend comme deuxième et/ou autre étage un étage à gaz à friction, notamment un étage Holweck, une pompe turbo-moléculaire étant avantageusement disposée avant l'étage à gaz à friction.

3. Installation de détection de fuite selon la revendication 2, **caractérisée en ce que** la zone intermédiaire (50) est disposée dans le dernier étage (17, 72, 74) de la pompe à vide poussé, vu dans la direction de flux principal.

4. Installation de détection de fuite selon l'une des revendications 1 ou 2, **caractérisée en ce que** le chemin de contre-courant à l'intérieur de l'étage dans lequel est disposée la zone intermédiaire (50), est inférieur à 80%, plus particulièrement inférieur à 60% du chemin de flux principal à l'intérieur de cet étage, est d'au moins un cinquième, notamment d'un quart, plus court que le chemin de flux principal.

5. Installation de détection de fuite selon l'une des revendications 1 à 4, **caractérisée en ce que** le chemin de contre-courant est d'au moins un cinquième, notamment d'un quart, plus court que le chemin de flux principal.

6. Installation de détection de fuite selon l'une des revendications 1 à 5, **caractérisée en ce que** le dispositif détendeur de gaz (54) effectue une réduction de la pression du gaz traceur d'au moins 30%, notamment d'au moins 40%.

7. Installation de détection de fuite selon l'une des revendications 1 à 6, **caractérisée en ce que** le dispositif détendeur de gaz (54) comprend un étranglement sélectif de gaz.

8. Installation de détection de fuite selon l'une des revendications 1 à 7, **caractérisée par** une canalisation by-pass (56) parallèle au dispositif détendeur de gaz (54) et pourvue d'une valve (58) pour un acheminement de gaz traceur à la zone intermédiaire (50), lorsque la pression de gaz traceur est réduite par rapport au test rapide.

9. Installation de détection de fuite selon l'une des revendications 1 à 8, **caractérisée en ce que** le dispositif détendeur de gaz (54) fait partie de la pompe à vide poussé (10, 11).

10. Installation de détection de fuite selon l'une des revendications 1 à 9, **caractérisée en ce que** la canalisation pour gaz traceur (44) est reliée par au moins une autre canalisation de raccordement (62, 68) à une zone intermédiaire (60, 66) supplémentaire du chemin de flux principal raccourcissant le chemin de flux à contre-courant.

11. Installation de détection de fuite selon la revendication 10, **caractérisée en ce que** dans ladite autre canalisation de raccordement (62, 68), est disposée une valve (64, 70).

12. Procédé de détection de fuite avec une installation de détection de fuite ayant
une canalisation pour gaz traceur (44) reliée à une chambre de test (42) et/ou à un objet à tester et à une pompe à vide préliminaire (40) et
une pompe à vide poussé (10, 11) à l'entrée de laquelle est disposé un détecteur (38) de gaz traceur et dont la sortie (34) est reliée à la pompe à vide préliminaire (40), la pompe à vide poussé (10, 11) comprenant au moins un élément rotor (12, 13) de façon qu'un chemin de flux principal allant de l'entrée (36) le long le ou les éléments rotor (12, 13) jusqu'à la sortie (34) soit défini, et la pompe à vide poussé (10, 11) comprenant un premier étage (10), un deuxième étage (15) suivant le premier dans la direction du flux principal et au moins un autre étage (17, 72, 74) suivant le deuxième dans la direction du flux principal, notamment une installation de détection de fuite selon l'une des revendications 1 à 11,
selon lequel la canalisation de gaz traceur (44) est reliée, pour un test rapide de l'objet, par une canalisation de raccordement (48) avec un des autres étages (17, 72, 74) dans une zone intermédiaire (50) des étages (17, 72, 74) et la sortie (34) de la pompe à vide poussé (10, 11) reste reliée à la pompe à vide préliminaire (40), de façon que le chemin de contre-courant du gaz traceur s'étendant de la zone intermédiaire (50) à l'entrée (36) soit plus court que le chemin de flux principal.

13. Procédé selon la revendication 12, selon lequel le test rapide est effectué immédiatement au début de la détection de fuite.

14. Procédé selon l'une des revendications 12 ou 13, selon lequel la chambre de test (42) et/ou l'objet à tester est raccordé après la fin du test rapide par une autre canalisation de raccordement (62, 68) reliée à la canalisation de gaz traceur (44), à une autre zone intermédiaire (60, 66) raccourcissant le chemin de flux à contre-courant.
